# EUROPEAN PATENT APPLICATION

(11) **EP 3 103 666 A1**
(43) Date of publication of application: **14.12.2016**
(21) Application number: 16172579.1
(22) Date of filing: 02.06.2016
(51) Int. Cl.: B60K 5/10, B60K 1/04, B60K 15/067, B66F 9/065, E02F 9/08, B60K 15/063

(54) **ARRANGEMENT FOR MOUNTING AN ENERGY DEVICE OF A MOBILE REACH MACHINE**

(30) Priority: 10.06.2015 FI 20155445
(71) Applicant: SKS Toijala Works Oy, 37800 Akaa (FI)
(72) Inventor: Siuko, Sampo, 37800 Akaa (FI); Kajander, Markku, 37800 Akaa (FI)
(74) Representative: Kolster Oy Ab

(57) **Abstract**

The invention relates to an arrangement for mounting an energy device to a frame of a mobile reach machine. The arrangement comprises an energy module (10) provided with one or more energy devices (7) and a sub frame (26). The energy module is mountable in one piece to a mounting place (31, 32) formed on a side surface of a main frame (3) of the reach machine (1). The fastening of the energy module comprises two fastening systems, namely an initial fastening system and a locking fastening system. The invention relates also to an energy module, a reach machine and a method of mounting an energy device to a mobile reach machine.

## Description

### Background of the invention

The invention relates to an arrangement for mounting at least one energy device to a frame of a mobile reach machine.

The invention further relates to an energy module of a mobile reach machine, a movable reach machine and a method of mounting at least one energy device to the frame of a mobile reach machine.

The field of the invention is defined more specifically in the preambles of the independent claims.

Reach machines are mobile material handling vehicles, which are typically used in freight terminals and in different loading and unloading sites. The reach machines are capable of lifting and transporting loads such as containers, trailers and sheet metal coils, for example. Depending on the load handling tools and means, the reach machine may also be suitable for handling bulk material such as logs. The reach machine comprises a carrier and a boom hinged to the carrier. The boom is arranged above the carrier and is in longitudinal direction of the reach machine. The carrier comprises a longitudinal main frame and is typically provided with a fixed front axle with wheels and a steerable wheel setting at a rear part of the frame. The carrier is further provided with one or more energy devices mounted on the main frame. The known solutions relating to the energy devices and their mounting have shown to contain some disadvantages.

### Brief description of the invention

An object of the invention is to provide a novel and improved arrangement and method for mounting one or more energy devices to a frame of a mobile reach machine. A further object is to provide a novel and improved energy module and a mobile reach machine comprising the same.

The arrangement according to the invention is characterized by characterizing features of first independent apparatus claim.

The energy module according to the invention is characterized by characterizing features of second independent apparatus claim.

The mobile reach machine according to the invention is characterized by characterizing features of third independent apparatus claim.

The method according to the invention is characterized by characterizing features of independent method claim.

An idea of the disclosed solution is that an energy module comprising one or more energy devices and a sub frame is formed, and one or more such modules are mountable to one or more lateral mounting places on side surfaces of a frame of a mobile reach machine. The mounting of the energy module comprises two fastening phases, wherein the energy module is at first arranged to be hung by means of a first fastening system and the fastening is completed by means of a second fastening system. The first fastening system comprises hang mounting means provided with one or more hook elements and one or more loop elements. The hook elements are mounted to the side surface of the main frame, and a sub frame of the energy module is provided with the loop elements connectable to the hook elements. Thus, the hook and loop elements match with each other and are connected to each other at an initial fastening phase.

An advantage of the disclosed solution is that the mounting and dismounting of the energy modules is facilitated and quicken. The two phase fastening of the energy module allows the module to be at first lifted on place and allowed to be initially supported by means of the first fastening system comprising hang mounting means. The actual or final fastening to the main frame is executed by means of the second fastening system. Since the energy module is supported by the hang mounting means there is no need to support the energy module by any lifting device during the final fastening phase, whereby more space and better visibility are offered for completing the second fastening step.

A further advantage of the disclosed solution is the use of the one or more modules, which may be equipped with needed devices and auxiliary components, and preassembled into units which may connected in one piece to the sub frame of the module. Thus, the preassembled energy module may comprise all the needed devices and systems in one unity, which can be mounted and dismounted easily and fast. If the energy module fails, it may be dismounted and substituted by a new energy module. Thanks to this, down time of the reach machine may be short. The dismounted energy module may be transported to a workshop for repair and service. At the work shop the repair and service work may be carried out in good circumstances and by competent maintenance personnel. An additional advantage of the module structure is that it offers good access to the components and devices of the module and thereby facilitates repair and service work. Further, the use of preassembled modules facilitates making updates to an energy system of the reach machine. Existing energy units may be substituted with new energy modules having different output capacity, operating principle, dimensions or utilizing new and improved technology.

All in all, the disclosed solution increases operating time of the reach machines, improves thereby productivity and also provides operational flexibility to maintenance and updating procedures of the reach machine. Moreover, the first fastening system comprising hooks and loops is simple and easy to manufacture and use.

According to an embodiment, the arrangement comprises a first lateral mounting place on a first side of the main frame and a second lateral mounting place on an opposing second side of the main frame. A first energy module comprising a power generating device is arranged to the first lateral mounting place, and a second energy module, which may comprise one or more energy storages, is arranged to the second lateral mounting place. The first energy module may be a so-called power pack. Thanks to this embodiment, all the primary devices and components relating to energy production and storage are arranged to energy modules, which are easily mounted and dismounted when manufacturing the reach machine and, also later, when repairing, servicing and updating the systems of the reach machine.

According to an embodiment, the reach machine is provided with one or more energy modules only on one lateral side of the main frame. Then the main frame may comprise one or more mounting places on one side of the main frame. The main frame may comprise at the mounting places a frame portion which is located asymmetrically relative to central axis of the reach machine, whereby more space is provided for the one or more energy modules. When two or more energy modules are arranged on the same side of the main frame, the modules may be located one after each other in the longitudinal direction.

According to an embodiment, the hang mounting means of the first fastening system comprise matching shape-locking elements on the opposing surfaces of the energy module and the main frame.

According to an embodiment, the hang mounting means of the first fastening system comprise one or more hook elements and one or more loop elements. The hook elements are mounted to the side surface of the main frame, and the sub frame is provided with the loop elements connectable to the hook elements. The system comprising hooks and loops is simple and easy to manufacture.

According to an embodiment, the hang mounting means of the first fastening system comprise one or more hook elements and one or more support surfaces. The sub frame is provided with the hook elements and the side surface of the main frame is provided with the support surfaces such as elements protruding from the side surface, shoulders, bended edges or openings made to the side surface.

According to an embodiment, the hang mounting means of the first fastening system are designed to transmit only vertical forces caused by gravity of the energy module. Thereby, the purpose of the first fastening system is to provide mounting assistance and the second fastening system serves as a primary fastening system receiving operational forces during the use between the energy module and the main frame.

According to an embodiment, the second fastening means are configured to generate a locking force pressing the sub frame against a side surface of the main frame at the mounting place. Thus, the second fastening means generate friction forces between the fastened components. Further, the second fastening means may also provide support against shearing forces and torque.

According to an embodiment, the fastening of the energy module is completed by means of screw fastening. Then, the locking means of the second fastening system comprise one or more fastening screws. The sub frame may comprise openings through which the fastening screws are passing. Further, side surfaces of the main frame comprise openings provided with threads, whereby they may receive the fastening screws and allow screw mounting between the energy module and the main frame. An advantage of the screw fastening is that it is inexpensive and endures well fatigue loads.

According to an embodiment, the fastening of the energy module is completed by means of other second fastening means than the above disclosed screw fastening means. Possible other second fastening means may be quick coupling means or fastening systems based on wedges, for example.

According to an embodiment, the sub frame of the energy module comprises two L-shaped support elements comprising vertical portions and horizontal portions. Sometimes the number of the support elements may be three, four or even more. The L-shaped support elements are locating at a distance from each other and may be connected to each other by means of one or more connecting pieces or intermediate elements. The vertical portions of the L-shaped support elements are provided with openings at their distal end portions. The openings serve as loop elements for the first fastening system and are connectable to hook elements, which are located on a side surface of the main frame. Instead of the hook elements bar or shaft like members may be used to support the L-shaped support elements. Further, the vertical portions of the L-shaped support elements may also be provided with several screw holes allowing screw mounting to the main frame. Moreover, the horizontal portions of the L-shaped support elements may comprise several upwardly facing energy device supports for connecting the energy device to the sub frame. The use of the L-shaped support elements is advantageous since no support elements are preventing access to the components and devices of the energy module. The structure is also simple, endures loads well and is easy to manufacture.

According to an embodiment, the energy module is an energy storing module comprising energy storing means such as pressure accumulators. Further, the sub frame of the energy module comprises two L-shaped support elements comprising vertical portions and horizontal portions. The vertical portions of the L-shaped support elements are provided with form surfaces, which form mounting recesses for horizontally mountable pressure medium accumulators or corresponding elongated storage elements. The shape of the recesses may be semi-circular. Thanks to this embodiment, the components of the module may be positioned effectively and with sufficient support.

According to an embodiment, the sub frame of the energy module consists of a framework, which may surround the energy device and other components of the module. The framework may be made of bars or tubes and may have lattice type configuration. The framework may be provided with fastening means for the mounting.

According to an embodiment, the sub frame of the energy module is provided with a bottom plate or corresponding one or more protective elements. Thereby the energy module may comprise a protective under shield at the bottom of the sub frame. Thanks to this embodiment the energy module may be protected against dents and dirt, for example.

According to an embodiment, the main frame of the reach machine has mounting places for energy modules on both lateral sides of the main frame. Further, side surfaces of the mounting places facing into opposite directions are at different transversal distances from longitudinal central axis of the reach machine. Thanks to the asymmetrical positioning of the mounting places, energy modules having different size, and especially different lateral dimensions, may be arranged on opposing sides of the main frame. Typically an energy module comprising a primary operating power generating device, such as a combustion engine, has greater lateral dimensions compared to an energy module comprising energy storing means, such as pressure accumulators, fuel tanks and alike. Thus, the energy module being provided with the primary energy or power source is mounted to the mounting place having greater lateral depth and the energy module comprising storage and auxiliary means is mounted to the mounting place with minor lateral depth.

According to an embodiment, the main frame of the reach machine comprises a longitudinal body part. At least a front part of the longitudinal body part of the frame is located asymmetrically in relation to a longitudinal central axis of the reach machine, whereby opposite side surfaces of the front part of the longitudinal body part are located at different lateral distances from lateral outer surfaces of the reach machine. A first side of the front part of the longitudinal body part is provided with a first mounting place for a first energy module and a second side of the front part of the longitudinal body part is provided with a second mounting place for a second energy module, whereby the first energy module and the second energy module are located asymmetrically in relation to the longitudinal central axis of the reach machine.

According to an embodiment, the main frame of the reach machine comprises a central longitudinal body part. The longitudinal body part is provided with lateral side surfaces which are provided with fastening places for energy modules. The longitudinal body part may be located at the central axis of the reach machine whereby the mounting places are positioned symmetrically relative to the central axis. This embodiment provides an alternative to the above disclosed asymmetrical positioning of the mounting places and may be used in situations wherein the energy modules arranged on opposite sides of the main frame have substantially similar lateral dimensions, or when no extra space is needed for any other reason.

The above-disclosed embodiments can be combined to form suitable solutions provided with necessary features disclosed in this patent application.

### Brief description of the figures

Some embodiments are described in more detail in the accompanying drawings, in which
Figure 1 is a schematic side view of a mobile reach machine,
Figure 2 is a schematic bottom view of a carrier of a reach machine,
Figure 3 is a schematic diagram showing some features of an energy module,
Figure 4 is a schematic view of a main frame of a reach machine and two sub frames allowing mounting of energy modules to mounting places on side surfaces of the main frame,
Figure 5 is a schematic view of a frame seen longitudinally towards a rear portion of the frame,
Figure 6 is a schematic view of an energy module comprising a primary power device of the reach machine, transmission and hydraulic pumps, Figure 7 is a schematic view of a sub frame of an energy module,
Figure 8 is a schematic top view of an alternative carrier of a reach machine,
Figures 9a - 9c are schematic and sectional views illustrating a mounting principle of an energy module, and
Figures 10 and 11 are schematic and sectional views illustrating some alternative hang mounting systems.

For the sake of clarity, the figures show some embodiments of the disclosed solution in a simplified manner. In the figures, like reference numerals identify like elements.

### Detailed description of some embodiments

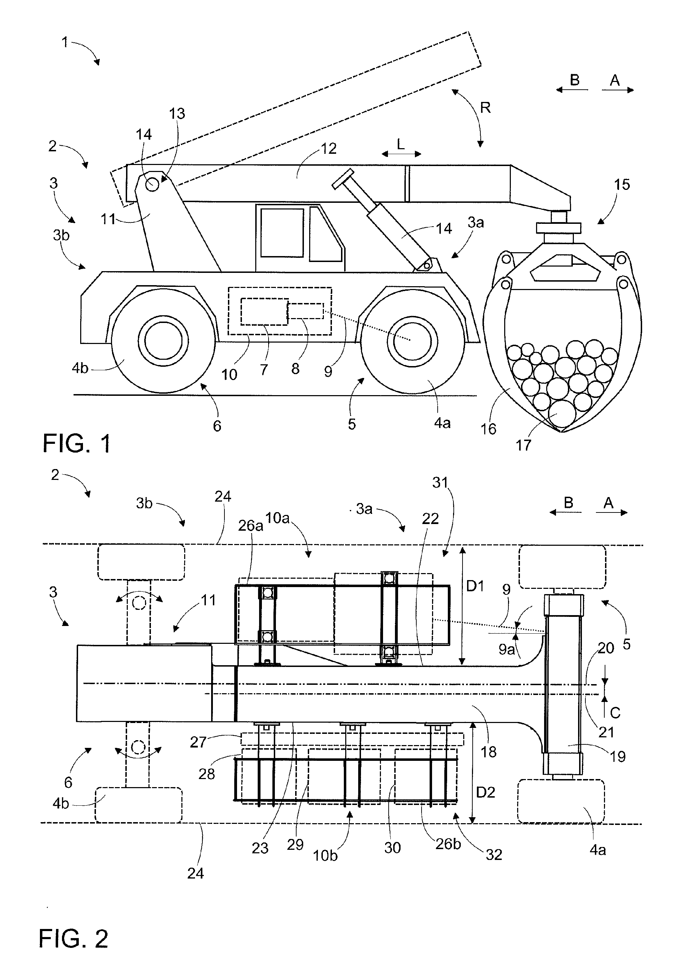

Figure 1 shows a reach machine 1 comprising a mobile carrier 2 provided with a main frame 3, and a plurality of wheels 4a, 4b. At a front end portion 3a of the main frame 3 may be a rigid non-steerable front axle 5 with front wheels 4a, and at the rear end portion 3b of the main frame 3 may be a steerable rear axle setting 6 with rear wheels 4b. The reach machine 1 may be front axle driven, whereby driving power may be transmitted from an energy device 7 via transmission means 8 to the front axle 5 by means of a cardan shaft 9. Alternatively, the power transmission may be hydraulic, for example. The energy device 7 of the reach machine 1 may comprise a combustion engine. The energy device 7 and the related auxiliary devices may be configured to form an energy module 10, as has been discussed above. The energy module 10 may be mounted against a side surface of the main frame 3. The energy module 10 may be covered by means of body panels or cover elements and is thereby not visible during the operation of the machine.

The main frame 3 comprises a mounting bracket 11 at the rear end portion 3b for mounting a boom 12 above the carrier 2. The boom 12 is in a longitudinal direction of the reach machine 1 and may be located at the central axis of the machine. The boom 12 may be connected to the mounting bracket 11 by means of a horizontal joint 13 comprising a hinge pin 14, or a corresponding connecting element. The boom 12 may be pivoted R relative to the joint 13 by means of one or more lifting actuators 14, which may hydraulic cylinders, for example. Figure 1 illustrates by means of broken lines the boom 12 in a lifted position. A distal end portion of the boom 12 is provided with load carrying means 15. In the solution shown in Figure 1, the boom 12 comprises clamping means 16 for handling logs 17. Length of the boom 12 may be altered L telescopically. In Figure 1 forward driving direction is indicated by an arrow A and a reverse driving direction is indicated by an arrow B.

Figure 2 shows a carrier 2 of a reach machine seen from below. A main frame 3 may comprise a longitudinal body part 18 and a transversal body part 19, which is arranged at a front portion 3a of the main frame 3. Thereby, the main frame 3 may have a shape that resembles letter T. The front axle 5 may be fastened to the transversal body part 19. At least the front part of the longitudinal body part 18 of the main frame 3 is located asymmetrically relative to centre line 20 of the main frame 3. The centre line 20 passes in a longitudinal direction of the main frame through a middle point of the transversal body part 19. The front portion of the longitudinal body part 19 has centre line 21, which is located at a transverse distance C from the centre line 20 of the main frame 3. The front part of the longitudinal body part 19 may be a tubular piece having a closed outer shell. The cross section of the front part of the longitudinal body part 19 has lateral side surfaces 22 and 23 facing into opposite directions. Since the body part 19 is positioned asymmetrically, the lateral side surfaces 22 and 23 are located at different transversal directions from outlines 24 passing longitudinally through outermost lateral surfaces of the reach machine. Then, the first side surface 22 is located at greater first lateral distance D1 from the outline 24 compared to second lateral distance D2 of the second side surface 23.

The side surfaces 22 and 23 may be provided with energy modules 10a, 10b. A first energy module 10a comprising a power generating device 25, such as a combustion engine, electrical motor or a hybrid power pack, may be mounted to the first side surface 22 by means of a sub frame 26a. The first energy module 10a may also comprise a hydraulic pump, transmission means and needed additional devices. The power generating device 25 and the hydraulic pump are examples of energy devices.

The second energy module 10b also comprises a sub frame 26b and pressure accumulators 27, fuel storages 28 and other storage elements 29 and 30 may be arranged to the sub frame 26b. The listed components 27, 28, 29 and 30 are also energy devices.

Thereby, the first side surface 22 may be provided with a first mounting place 31, and the second side surface 23 may be provided with a second mounting place 32. The first mounting place 31 comprises a larger free space for mounting the energy modules than the second mounting place 32. Typically, the power generating device 25 requires more space than the energy storage devices, wherefore the power generating device may be arranged to the first mounting place 31.

Figure 2 further shows that, thanks to the disclosed asymmetrical positioning of the first energy module 10a, an angle 9a of a cardan shaft 9 relative to the front axle 5 may be decreased. This improves durability of the transmission.

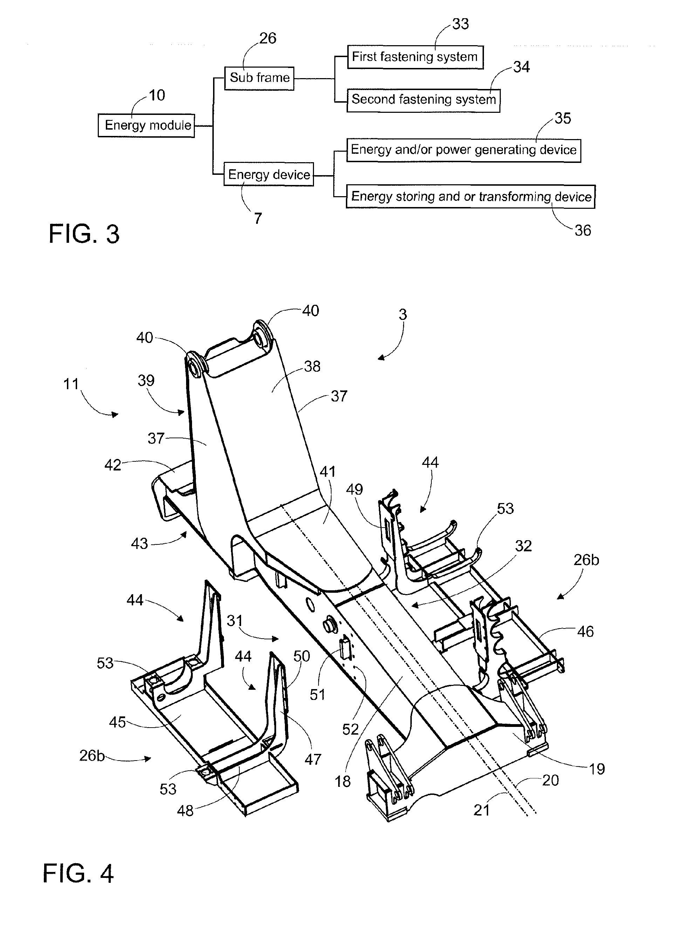

Figure 3 illustrates that an energy module 10 comprises a sub frame 26 and one or more energy devices 7. The sub frame 26 is provided with a first fastening system 33 and second fastening system 34, whereby the mounting and fastening of the energy module 10 is executed in two successive phases. The energy device 7 may comprise one or more energy generating devices 35 or alternatively it may comprise energy storing or transforming devices 36.

Figure 4 discloses a main frame 3, which has a longitudinal body part 18, a transverse body part 19 and a mounting bracket 11. As can be seen, the longitudinal body part 18 and the mounting bracket 11 may both have structures having closed outer shells, whereby they comprise box-like structures which are beneficial regarding withstanding and transmitting loads subjected to the main frame 3 during the operation of a reach machine. The mounting bracket 11 may comprise side plates or bracket plates 37, a front plate 38 and a rear plate 39. At an upper portion of the mounting bracket 11 there may be connecting lugs 40 facing upwards and serving as boom connecting means.

The mounting bracket 11 may be integrated to be part of the structure of the longitudinal body part 18. The bracket plates 37 may be connected to inner or outer surfaces of side plates of the longitudinal body part. At a lower portion of the mounting bracket 11 there may also be an extension part 41 for improving transmission of loads between the mounting bracket 11 and the longitudinal portion 18. The mounting bracket 11 may be located symmetrically at the central axis 20 of the machine. However, at least the front part of the longitudinal body part 18 is located asymmetrically, whereby central axis 20 and 21 do not coincide. The rear most part of the main frame 3 may comprise support surfaces 42 for supporting a counter weight, and further, support surfaces 43 for mounting a rear axle setting.

Figure 4 further discloses that the main frame 3 may be provided with energy modules 10a, 10b, which may be mounted to lateral mounting places 31, 32 on the side surfaces of the front part of the longitudinal body part 18. The energy modules 10a, 10b comprise sub frames 26a, 26b, which be formed of two or more substantially L-shaped support elements 44. The support elements 44 are located at longitudinal distances from each other and may be connected to each other by means of a bottom plate 45 or any other connecting element 46 so that the sub frame can be handled as one piece having sufficient rigidity. The L-shaped support element 44 comprises a substantially vertical part 47 and a substantially horizontal part 48. An upper part of the vertical part 47 may be provided with one or more openings 49, which may be part of a first fastening system of the energy module. The vertical part 47 may also comprise several openings 50 allowing screw coupling and serving as a part of a second fastening system of the module. At the mounting places 31 and 32 there may be support surfaces such as hook-elements 51, which are part of the first fastening system and allow the sub frame 26a, 26b to be supported initially by passing the hooks-elements through the openings 49. The mounting places 31, 32 also comprise threaded openings 52 for receiving fastening screws and thereby serving as a part of the second fastening system.

The horizontal parts 48 of the support elements 44 may comprise upwardly facing energy device supports 53 for connecting desired energy devices to the modules.

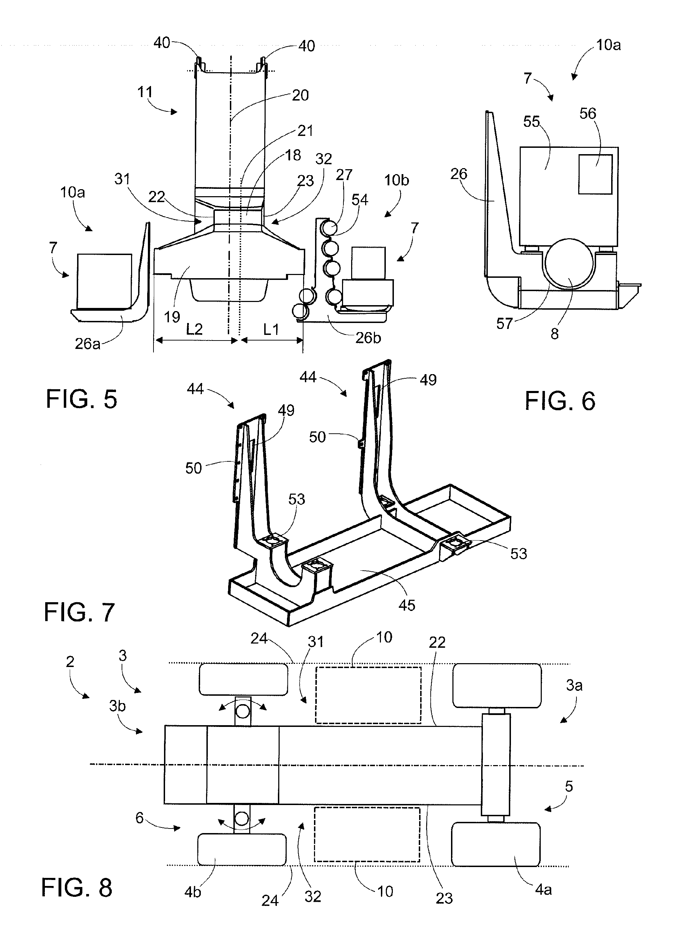

Figure 5 shows the main frame 3 seen longitudinally towards a rear portion of the frame. The main features of this Figure are disclosed already above. However, it can be seen that the sub frame 26b may be provided with support spaces or recesses 54 for receiving elongated storage elements such as pressure accumulators 27. Figure 5 also illustrates that the centre axis 20 and 21 are at a lateral distance from each other. Then, later distances L1 to L2 from ends of the transversal body part 19 to the central axis 21 of the longitudinal body part 19 are different in size.

Figure 6 discloses an energy module 10a comprising a primary power device 55 of the reach machine, a transmission device 8 and a hydraulic pump 56, which all may be energy devices 7. The sub frame 26a may comprise a shaped stand 57 for receiving the transmission device 8 or any other energy device 7. Figure 7 discloses the sub frame 26a from another view angle.

Figure 8 discloses an alternative carrier 2 of a reach machine. In this embodiment, a main frame 3 is without asymmetrical front part whereby on both sides of the longitudinal body part 18 are mounting places having substantially similar depth. The energy modules 10a, 10b may be mounted against the side surfaces of the main frame 3, as it is disclosed in this patent application.

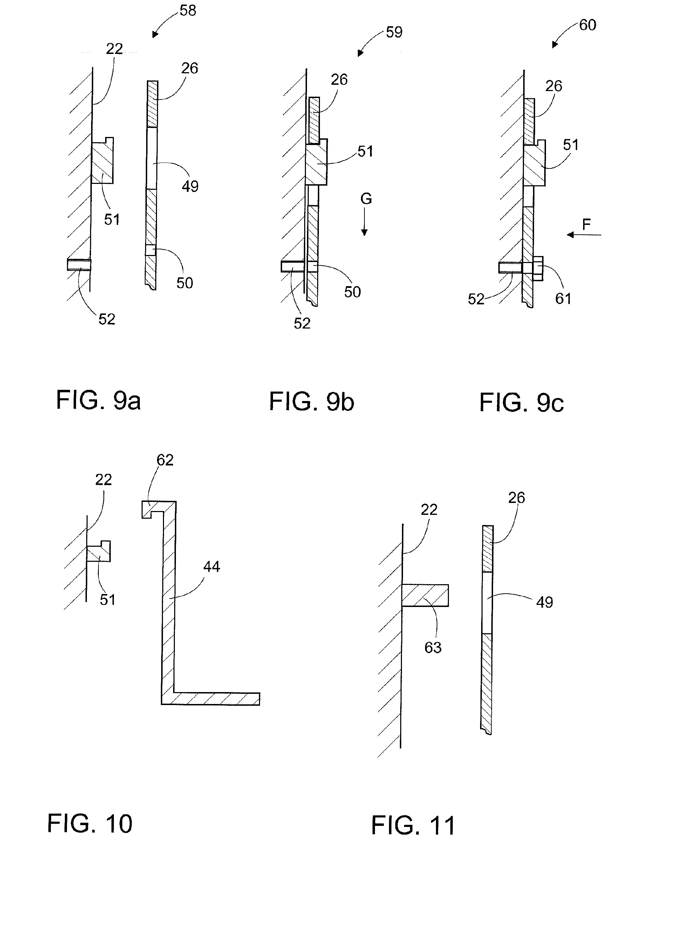

Figures 9a - 9c illustrate a mounting principle of an energy module. In Figure 9a a lifting phase 58 is shown, wherein the module is lifted to the mounting place by means of an overhead bridge crane or a forklift truck, for example. In Figure 9b an initial first fastening phase 59 is shown, wherein the module is hang fastened by means of an opening 49 and a hook-element 51. Thereby, gravity G of the module may be transmitted to the side surface 22 of the main frame. Figure 9c discloses a locking phase 60, wherein the sub frame is fastened and secured immovably against the side surface 22. Fastening screws 61 may be utilized for generating force F for keeping the module locked in place.

Figure 10 and 11 disclose some alternative hang mounting systems. In Figure 10, the first fastening system is without any opening in the sub frame, but instead, there is a bending 62 or corresponding support surface, which may be set against a hook-element 51 or corresponding support surface.

In Figure 11 the hook element is substituted by a shaft, pin or corresponding protruding element 63, which may penetrate through an opening of the sub frame, and may then thereby provide an initial support until the second fastening phase is executed.

The drawings and the related description are only intended to illustrate the idea of the invention. In its details, the invention may vary within the scope of the claims.

## Claims

1. An arrangement for mounting at least one energy device to a main frame of a mobile reach machine, wherein the arrangement comprises:
at least one energy module (10) comprising at least one energy device (7) and a sub frame (26), which are arranged to form a pre-assembled unit allowing assembly and disassembly as one piece; and
at least one lateral mounting place (31, 32) formed on a side of the main frame (3);
**characterized in that** the arrangement further comprises:
two fastening systems comprising a first fastening system (33) and a second fastening system (34);
wherein the first fastening system (33) is provided with hang mounting means for transmitting vertical loads of the energy module (10) to the main frame (3);
the hang mounting means of the first fastening system (33) comprises at least one hook element (51) mounted to the side surface (22, 23) of the frame, and the sub frame (26) is provided with at least one loop element connectable to the hook element (51); and
wherein the second fastening system (34) is provided with locking means for securing the sub frame (26) immovably against the lateral mounting place (31, 32) of the main frame (3).

2. The arrangement as claimed in claim 1, **characterized in that**
the arrangement comprises a first lateral mounting place (31) on a first side (22) of the main frame (3) and a second lateral mounting place (32) on an opposing second side (23) of the main frame (3); and
a first energy module (10a) comprising a power generating device is arranged to the first lateral mounting place (31), and a second energy module (10b) comprising at least one energy storage is arranged to the second lateral mounting place (32).

3. The arrangement as claimed in claim 1 or 2, **characterized in that**
the locking means of the second fastening system (34) comprises at least one fastening screw (61).

4. The arrangement as claimed in any one of the preceding claims 1 to 3, **characterized in that**
the sub frame (26) comprises at least two L-shaped support elements (44) comprising vertical portions (47) and horizontal portions (48), and the L-shaped support elements (44) are locating at a distance from each other;
the vertical portions (47) of the L-shaped support elements (44) are provided with openings (49) at their distal end portions, whereby the openings (49) serve as loop elements for the first fastening system (33);
the vertical portions (47) of the L-shaped support elements (44) are further provided with several screw holes (50) allowing screw mounting to the main frame (3); and
the horizontal portions (48) of the L-shaped support elements (44) comprise several upwardly facing energy device supports (53) for connecting the energy device (7) to the sub frame (26).

5. The arrangement as claimed in any one of the preceding claims 1 to 4, **characterized in that**
at the bottom of the sub frame (26) is a bottom plate (45) serving as a protective under shield.

6. An energy module of a mobile reach machine,
wherein the energy module (10) comprises at least one energy device (7) and a sub frame (26), which form a pre-assembled unit;
**characterized in that**
the sub frame (26) comprises two fastening systems, wherein a first fastening system (33) comprises hang mounting means and a second fastening system (34) comprises locking means; and
the hang mounting means of the sub frame (26) is provided with at least one loop element in accordance with claim 1.

7. A mobile reach machine comprising:
a movable carrier (2) provided with a main frame (3) comprising a longitudinal body part (18) and a protruding mounting bracket (11) at a rear end portion (3b) of the longitudinal body part (18);
a transversal rigid front axle (5) at a front end (5a) of the main frame (3) and being provided with at least two front wheels (4a);
a steerable transversal rear axle setting (6) at the rear end portion (3b) of the main frame (3) and being provided with at least two rear wheels (4b);
at least one energy device (7) for providing operating energy for the reach machine (1);
an elongated boom (12), which is located longitudinally above the main frame (3), and which comprises a first end mounted pivotally (R) to the mounting bracket (11), and a distal second end is provided with load carrying means (15);
at least one lifting actuator (14) for moving the boom (12) relative to the pivotal mounting (13) whereby the second end of the boom (12) is allowed to be lifted and lowered; and
the reach machine (1) comprises at least one energy module (10) provided with the at least one energy device (7) and a sub frame (26), which form one mountable and dismountable unit;
**characterized in that**
the energy module (10) is mounted to a side surface (22, 23) of the longitudinal body part (18) by utilizing two separate fastening systems between the sub frame (26) and the side surface (22, 23) of the main frame (3), wherein a first fastening system (33) comprises hang mounting means for receiving vertical loads, and a second fastening system (34) comprises locking means for fastening the energy module (10) immovably against the side surface (22, 23);
and wherein the hang mounting means are in accordance with claim 1.

8. The mobile reach machine as claimed in claim 7, **characterized in that**
at least a front part (3a) of the longitudinal body part (18) of the frame (3) is located asymmetrically in relation to a longitudinal central line (20) of the reach machine (1), whereby opposite side surfaces (22, 23) of the front part of the longitudinal body part are located at different lateral distances (D1, D2) from lateral outer surfaces (24) of the reach machine (1); and
a first side (22) of the front part of the longitudinal body part (18) is provided with a first mounting place (31) for a first energy module (10a) and a second side (23) of the front part of the longitudinal body part (18) is provided with a second mounting place (32) for a second energy module (10b), whereby the first energy module (10a) and the second energy module (10b) are located asymmetrically in relation to the longitudinal central line (20) of the reach machine (1).

9. A method of mounting at least one energy device to a main frame of a mobile reach machine, the method comprising:
pre-assembling at least one energy module (10) comprising at least one energy device (7) and a sub frame (26);
providing the main frame (3) with at least one lateral mounting place (31, 32) on at least one side surface (22, 23) of the main frame (3); and
mounting the energy module (10) in one piece to the lateral mounting place (31, 32), whereby the energy module (10) is located outside the main frame (3);
**characterized by**
lifting (58) the energy module (10) to the mounting place (31, 32) and fastening it initially (59) to the main frame (3) by means of hang fastening means, wherein the main frame is provided with at least one hook element (51) and the sub frame (26) is provided with at least one loop element; and
keeping the energy module (10) vertically supported (59) by means of the initial hang fastening means (33) until the fastening of the energy module (10) is completed by means of a second fastening system (34) provided with locking means, which secure the sub frame (26) of the energy module (10) immovably against the lateral mounting place (31, 32) of the main frame (3).
